# EUROPÄISCHE PATENTSCHRIFT

(11) **EP 1 952 043 B1**
(45) Veröffentlichungstag und Bekanntmachung des Hinweises auf die Patenterteilung: **29.07.2009**
(21) Anmeldenummer: 06819625.2
(22) Anmeldetag: 20.11.2006
(51) Int. Cl.: F16D 65/21

(54) **ELEKTROMECHANISCHE BREMSE MIT SPIELFREIER BETÄTIGUNG**
ELECTROMECHANICAL ZERO BACKLASH BRAKE
FREIN ELECTROMECANIQUE SANS JEU

(30) Priorität: 21.11.2005 DE 102005055295
(43) Veröffentlichungstag der Anmeldung: 06.08.2008
(73) Patentinhaber: Continental Automotive GmbH, 30165 Hannover (DE)
(72) Erfinder: BAIER-WELT, Christian, 64372 Ober-Ramstadt (DE); BLENDEL, Monika, 65812 Bad Soden (DE); EMMEL, Lars, 65205 Wiesbaden (DE); PFEIFFER, Stefan, 65817 Eppstein (DE); POWILEIT, Hendrik, 61389 Schmitten (DE); RIGORTH, Marcel, 64832 Babenhausen (DE); WÜRGES, Mathias, 61462 Königstein (DE); ZUBER, Heinrich, 65824 Schwalbach am Taunus (DE)
(86) Internationale Anmeldenummer: PCT/EP2006/068675
(87) Internationale Veröffentlichungsnummer: WO 2007/057465

(56) Entgegenhaltungen:
- WO-A-02/25136
- WO-A2-02/25137
- WO-A2-02/095257
- DE-A1- 19 819 564

## Beschreibung

Die Erfindung betrifft eine elektromechanische Bremse, insbesondere für Fahrzeuge, mit einem elektrischen Aktuator, der eine Betätigungskraft erzeugt und auf zumindest ein Reibglied wirkt, um dieses zum Hervorrufen einer Reibkraft gegen ein abzubremsendes Bauteil der Bremse zu drücken, und einer zwischen dem Reibglied und dem elektrischen Aktuator angeordneten Selbstverstärkungseinrichtung mit einer Keilanordnung, die zur Selbstverstärkung der vom elektrischen Aktuator erzeugten Betätigungskraft führt. Die Keilanordnung weist wenigstens einen Keil mit einem Steigungswinkel α auf, der sich an einem zugehörigen Widerlager abstützt. Eine solche elektromechanische Bremse ist aus der WO 02/095257 bekannt.

Eine andere elektromechanische Bremse mit einer Selbstverstärkungseinrichtung ist aus der deutschen Patentschrift DE 198 19 564 C2 bekannt. Bei der in diesem Dokument beschriebenen Bremse tritt das Problem auf, dass das Maß der Selbstverstärkung, festgelegt durch die Wahl des Steigungswinkels α des Keils oder der Keile der Keilanordnung, immer nur so groß bemessen werden kann, dass unabhängig vom Reibungskoeffizienten µ zwischen dem Reibbelag und dem abzubremsenden Bauteil, der sich je nach Betriebszustand der Bremse ändert, entweder immer eine Druckkraft oder immer eine Zugkraft auf den Keil der Selbstverstärkungseinrichtung ausgeübt wird. Ein Vorzeichenwechsel der Aktuatorkraft soll vermieden werden, weil sonst das im Aktuator vorhandene Spiel durchlaufen werden muss, was zu undefinierten Zuständen und damit zu unerwünschten Schwankungen der Regelgröße (Bremskraft) führt. Aufgrund dieser Beschränkungen kann bei der aus dem genannten Dokument bekannten elektromechanischen Bremse der Bereich der optimalen Selbstverstärkung, nämlich der Bereich, in dem der Wert des Reibungskoeffizienten µ zumindest etwa dem Wert tan α entspricht, nicht genutzt werden, weil am Punkt der optimalen Selbstverstärkung, d.h. wenn der Reibungskoeffizient µ denselben Wert wie der Tangens des Steigungswinkels α hat, die erforderliche Betätigungskraft, also die Aktuatorkraft, ihre Richtung wechselt.

Gemäß der oben genannten WO 02/095257 ist das Problem des Aktuatorspiels durch einen Aktuator gelöst, der zwei Elektromotoren aufweist, die auf definierte Weise gegeneinander arbeiten, um in den meisten Betriebssituationen das vorhandene Aktuatorspiel zu eliminieren. Ersichtlich bedingt.eine solche Lösung einen erhöhten konstruktiven und steuerungstechnischen Aufwand.
Der Erfindung liegt die Aufgabe zugrunde, eine verbesserte elektromechanische Bremse mit Selbstverstärkung bereitzustellen, deren Arbeitsbereich im Bereich der optimalen Selbstverstärkung liegen kann, ohne dass es zu negativen Auswirkungen hinsichtlich ihrer Regelbarkeit kommt, und die dennoch konstruktiv einfach aufgebaut und steuerungstechnisch einfach zu handhaben ist.

Ausgehend von einer elektromechanischen Bremse der eingangs beschriebenen Art ist diese Aufgabe erfindungsgemäß gelöst durch eine Bremse mit den im Patentanspruch 1 oder 2 angegebenen Merkmalen. Zur konstruktiven und steuerungstechnischen Vereinfachung weist der Aktuator der erfindungsgemäßen Bremse demnach nur einen einzigen Elek-tromotor auf, der die von ihm erzeugte Betätigungskraft über eine Spindel/Mutter-Anordnung mit entweder einer drehbar gelagerten, ortsfesten Spindel und einer drehfesten, durch Drehung der Spindel auf der Spindel axial hin und her bewegbaren Mutter oder einer drehbar gelagerten, ortsfesten Mutter und einer drehfesten, durch Drehung der Mutter axial hin und her bewegbaren Spindel abgibt. Damit im Aktuator kein unerwünschtes Spiel auftritt, ist die drehbare Spindel mittels eines oder mehrerer axial vorgespannter Lager drehbar gelagert. Die axiale Vorspannung der Spindellagerung beseitigt jegliches axiale Spiel der Spindel. Ferner ist die Mutter auf der Spindel in Axialrichtung gegenüber der Spindel vorgespannt angebracht, um jegliches Spiel zwischen der Mutter und der Spindel zu beseitigen. Schließlich wird die Hin- und Herbewegung der Mutter oder der Spindel mittels eines Übertragungselementes auf die Keilanordnung übertragen, das spielfrei einerseits mit der Mutter oder der Spindel und andererseits mit der Keilanordnung verbunden ist. Auf diese Weise wird jede von dem Elektromotor des Aktuators hervorgerufene Betätigungsbewegung spielfrei auf die Keilanordnung der Selbstverstärkungseinrichtung übertragen, unabhängig davon, ob der momentane Betriebszustand der Bremse zum Aufrechterhalten einer gewünschten Bremskraft das Ausüben einer Druckkraft oder einer Zugkraft auf die Keilanordnung erfordert.

Gemäß einer bevorzugten Ausführungsform der erfindungsgemäßen elektromechanischen Bremse wird die in Axialrichtung vorgespannte Lagerung der drehbaren Spindel durch wenigstens ein axial vorgespanntes Schrägkugellager erreicht. Das Schrägkugellager ist in Fachleuten auf diesem Gebiet bekannter Weise so angeordnet, dass es einen gewissen Druck in Axialrichtung ausübt und so eventuell vorhandenes Axialspiel der mit ihm gelagerten Spindel eliminiert. In konstruktiv vorteilhafter Weise können zur spielfreien drehbaren Lagerung der Spindel auch zwei axial vorgespannte Schrägkugellager dienen, wobei die axiale Vorspannung dieser beiden Lager dann bezüglich der Spindel in entgegengesetzten Richtungen erfolgt. Alle anderen eine axiale Vorspannung ermöglichenden Lager wie z.B. Rollen- oder Nadellager können ebenfalls verwendet werden. Alternativ ist die drehbare Spindel in einer Fest-/Loslageranordnung gelagert.

Bei bevorzugten Ausführungsbeispielen der erfindungsgemäßen elektromechanischen Bremse wird die bezüglich der Spindel axiale Vorspannung der Mutter dadurch realisiert, dass die Mutter zwei axial gegeneinander verspannte Mutterelemente umfasst. Die beiden Mutterelemente haben einen einstellbaren und fixierbaren axialen Abstand voneinander. Zur Eliminierung jeglichen Spiels zwischen der Mutter und der Spindel wird der axiale Abstand der beiden Mutterelemente so eingestellt, dass kein Spiel mehr zur Spindel vorhanden ist und dieser axiale Abstand wird dann fixiert. Beispielsweise können die beiden Mutterelemente über ein Axialgewinde miteinander verbunden sein, so dass durch Hinein- bzw. Herausschrauben des einen Mutterelements in das andere bzw. aus dem anderen Mutterelement der axiale Abstand zwischen beiden Mutterelementen einstellbar und mittels einer Kontermutter fixierbar ist.

Bei einer bevorzugten Ausführungsform der erfindungsgemäßen elektromechanischen Bremse ist das Übertragungselement eine schwenkbar an der Mutter oder der Spindel und der Keilanordnung angelenkte Koppelstange, deren Lagerstellen spielfrei vorgespannt sind. Gemäß einer Ausführungsform sind die Lagerstellen als Polygonprofil ausgebildet, so dass durch eine relativ zueinander erfolgende Verdrehung ein spielfreier Sitz erreicht wird. Auch können die Lagerstellen als Festkörpergelenke ausgebildet sein, z.B. in Gestalt einer Blattfeder. Alternativ kann jedes andere Übertragungselement verwendet werden, das entweder spielfrei ist oder durch geeignete Ausführung seiner Anlenkungs- und/oder Lagerstellen spielfrei gestaltet werden kann. Beispielsweise kann als Übertragungselement eine schwenkbar an der Mutter oder der Spindel und der Keilanordnung angelenkte, zweiteilige Stange verwendet werden, deren beide Teile durch einen Gewindeeingriff miteinander verbunden sind. Durch Hinein- bzw. Hinausschrauben des einen Teils relativ zum anderen Teil lässt sich die Länge einer solchen Stange so einstellen, dass an den Anlenkungs- und/oder Lagerstellen vorhandenes Spiel nicht mehr zur Wirkung kommt.

Bei bevorzugten Ausführungsformen der erfindungsgemäßen elektromechanischen Bremse erstreckt sich die Spindel parallel oder jedenfalls ungefähr parallel zu einer Keilschräge der Keilanordnung. Vorzugsweise ist die Keilschräge dabei diejenige, die für eine Bremsung in der Richtung herangezogen wird, in der die meisten Bremsvorgänge erwartet werden. Bei einer Bremse für ein Kraftfahrzeug wird diese Keilschräge demnach die für eine Bremsung aus Vorwärtsfahrt zuständige Keilschräge sein. Mit der zumindest im Wesentlichen parallel zur Keilschräge angeordneten Spindel wird erreicht, dass kaum eine bzw. keine Relativbewegung mehr zwischen der Mutter oder der Spindel der Spindel/Mutter-Anordnung und dem vom Aktuator bewegten Bauteil der Keilanordnung auftritt, wenn es sich um eine solche Bremsung handelt, bei der die zur Spindel parallele Keilschräge der Keilanordnung Verwendung findet. Die zumindest im Wesentlichen parallel zu der Keilschräge, die der Hauptbremsrichtung entspricht, angeordnete Spindel zeichnet sich ferner bei Bremsungen in der Hauptbremsrichtung durch die weitgehende oder vollständige Abwesenheit von Querkräften aus, die sonst, d.h. bei nicht zumindest im Wesentlichen parallel zur Keilschräge gewählter Anordnung der Spindel, auf die Spindel wirken würden.

Bei Anwendungen der erfindungsgemäßen elektromechanischen Bremse, bei der die durch die Spindel/Mutter-Anordnung erreichte Untersetzung der Drehbewegung des Elektromotors nicht ausreicht, kann der Elektromotor selbst als Motor/GetriebeEinheit ausgebildet sein, um eine größere Gesamtuntersetzung bereitzustellen.

Insgesamt ist erfindungsgemäß eine aufgrund nur einer Spindel/Mutter-Anordnung und nur einem Elektromotor kostengünstigere, konstruktiv vereinfachte und steuerungstechnisch leichter zu beherrschende elektromechanische Bremse bereitgestellt.

Zwei Ausführungsbeispiele einer erfindungsgemäßen elektromechanischen Bremse werden im Folgenden anhand der beigefügten, schematischen Figuren näher erläutert. Es zeigt:
- Figur 1: eine teilweise geschnittene Darstellung der wichtigsten Komponenten eines ersten Ausführungsbeispiels einer erfindungsgemäßen elektromechanischen Bremse mit einer Selbstverstärkungseinrichtung, und
- Figur 2.: eine Detailansicht eines gegenüber Figur 1 veränderten, zweiten Ausführungsbeispiels einer erfindungsgemäßen elektromechanischen Bremse mit Selbstverstärkungseinrichtung.

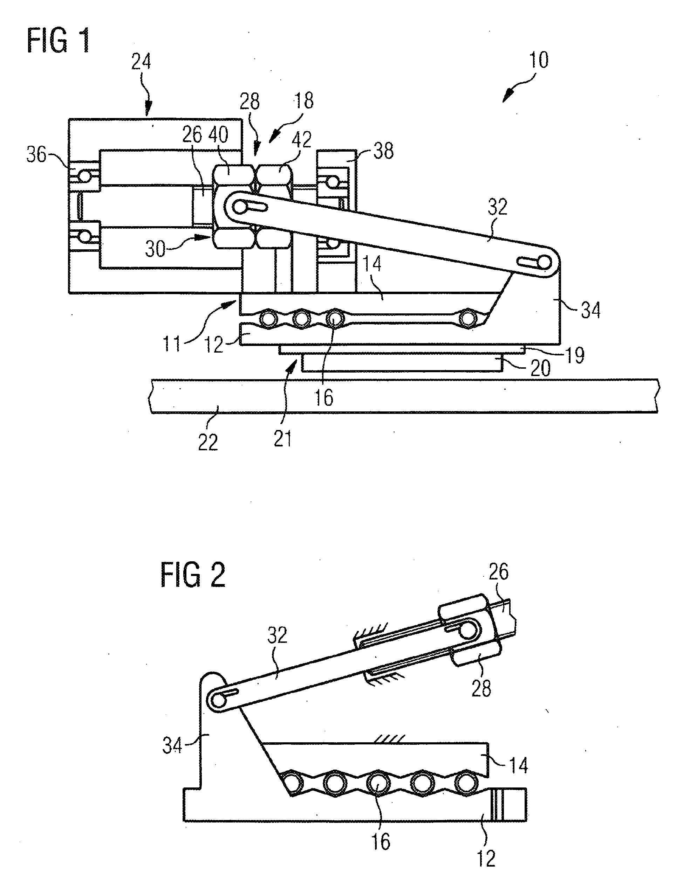

In Figur 1 sind die im Rahmen der vorliegenden Erfindung besonders interessierenden Teile eines ersten Ausführungsbeispiels einer hier als Scheibenbremse für ein Kraftfahrzeug ausgeführten elektromechanischen Bremse 10 teilweise im Schnitt dargestellt. Die Bremse 10 umfasst eine integrierte Selbstverstärkungseinrichtung, wie sie zum Beispiel aus der bereits genannten WO 02/095257 hervorgeht, auf die hiermit ausdrücklich Bezug genommen wird. Eine solche Selbstverstärkungseinrichtung weist eine Keilanordnung 11 mit zwei Keilplatten 12, 14 auf, zwischen denen zur Reibungsverminderung Rollen 16 angeordnet sind. Zur Betätigung der Fahrzeugbremse 10 wird die eine Keilplatte 12 mittels eines Aktuators 18 relativ zur anderen Keilplatte 14 verschoben, wodurch sich der Abstand zwischen den beiden Keilplatten 12, 14 vergrößert. Der somit entstehende Hub in einer Richtung normal zu den Hauptebenen der beiden Keilplatten 12, 14 wird dazu verwendet, ein aus einer Belagträgerplatte 19 und einem darauf befestigten Reibbelag 20 bestehendes Reibglied 21 in Kontakt mit einer Bremsscheibe 22 zu bringen. Dreht sich die Bremsscheibe 22, so übt sie über die zwischen dem Reibbelag 20 und der Bremsscheibe 22 entstehende Reibungskraft eine Mitnahmekraft auf den Reibbelag 20 aus, die rückgeführt zu den Keilplatten 12, 14 ein weiteres "Aufspreizen", d.h. einen größeren Hub der Keilanordnung 11 und damit eine entsprechende Erhöhung der Kraft bewirkt, mit der der Reibbelag 20 gegen die Bremsscheibe 22 gepresst wird, ohne dass hierzu die vom Aktuator 18 selbst erzeugte Kraft erhöht zu werden braucht.

Der Aktuator 18 umfasst einen einzigen Elektromotor 24, der eine drehbar gelagerte, axial ortsfeste Spindel 26 in Drehung zu versetzen vermag. Auf der Spindel 26 ist eine Mutter 28 verdrehfest angeordnet, die durch eine Drehung der Spindel 26 auf der Spindel axial hin und her bewegt werden kann. Alternativ kann die Mutter ortsfest und drehbar gelagert sein und die Spindel drehfest und axial hin und her bewegbar (nicht gezeigt). Die Spindel 26 und die Mutter 28 bilden demnach zusammen eine Spindel/Mutter-Anordnung 30.

Zur Übertragung der durch Drehung der Spindel 26 bewirkten axialen Bewegung der Mutter 28 auf die Keilplatte 12 dient eine Koppelstange 32, die mit ihrem einen Ende an der Außenseite der Mutter 28 und mit ihrem anderen Ende an einem Fortsatz 34 der Keilplatte 12 schwenkbar angelenkt ist.

Zur Betätigung der Bremse 10 wird der Elektromotor 24 des Aktuators 18 aktiviert, um die Spindel 26 in der einen oder der anderen Richtung in Drehung zu versetzen. Die gewünschte Drehrichtung der Spindel 26 hängt davon ab, in welcher Richtung sich die abzubremsende Bremsscheibe 22 dreht. Damit die Selbstverstärkungseinrichtung ihre Funktion erfüllen kann, muss der Aktuator 18 die Keilplatte 12 bezüglich der Keilplatte 14 in der Richtung verschieben, in der sich auch die Bremsscheibe 22 dreht. Nur dann nämlich laufen die Rollen 16 zwischen den beiden Keilplatten 12 und 14 diejenigen Keilschrägen hinauf, die nach dem erfolgten Kontakt des Reibbelags 20 mit der Bremsscheibe 22 ein weiteres Aufspreizen der Keilanordnung 11 und damit die gewünschte Selbstverstärkung bewirken. Zum Beenden einer Bremsung wird die Spindel 26 in entgegengesetzter Richtung gedreht, wodurch die beiden Keilplatten 12, 14 sich einander wieder annähern und der Reibbelag 20 außer Eingriff mit der Bremsscheibe 20 gerät.

Aus den eingangs geschilderten Gründen (möglicher Wechsel zwischen Zugkeilanordnung und Druckkeilanordnung in Abhängigkeit des zwischen Reibbelag und Bremse herrschenden Reibwertes) ist jegliches Spiel im Aktuator 18 unerwünscht. Zur Vermeidung eines solchen Spiels weist die Bremse 10, genauer deren Aktuator 18, eine Reihe von Maßnahmen auf. So ist die Spindel 26 mittels zweier axial vorgespannter Kugellager 36, 38 drehbar gelagert. Im gezeigten Ausführungsbeispiel sind die beiden Kugellager 36, 38 Schrägkugellager, die die Spindel 26 axial vorspannen, d.h. die eine in Axialrichtung wirkende Kraft auf die Spindel 26 aufbringen. Die vom Kugellager 36 bzw. 38 auf die Spindel 26 aufgebrachten axialen Vorspannungen sind entgegengesetzt gerichtet, so dass jegliches axiale Spiel der Spindel 26 beseitigt ist.

Zur Beseitigung von Spiel zwischen der Mutter 28 und der Spindel 26 ist die Mutter auf der Spindel mit axialer Vorspannung angebracht. Im gezeigten Ausführungsbeispiel besteht hierzu die Mutter 28 aus zwei Mutterelementen 40, 42, die über ein Schraubgewinde (nicht dargestellt) miteinander verbunden sind und durch schrauben in der einen bzw. anderen Richtung axial aufeinander zu bzw. voneinander weg bewegt werden können. Der axiale Abstand zwischen den beiden Mutterelementen 40, 42 ist somit einstellbar. Zur Eliminierung von Spiel wird der axiale Abstand der beiden Mutterelemente 40, 42 solange verändert, bis kein Spiel mehr zur Spindel 26 vorhanden ist. Die gefundene Stellung der Mutterelemente 40, 42 wird mittels einer nicht dargestellten Kontermutter fixiert.

Die Koppelstange 32 kann an ihren Anlenkungspunkten Spiel aufweisen. Um solches Spiel zu beseitigen, sind die Anlenkungs- bzw. Lagerstellen der Koppelstange 32 in eine Richtung vorgespannt, die vorhandenes Spiel nicht mehr zur Wirkung kommen lässt.

Durch die genannten Maßnahmen ist gewährleistet, dass jede Betätigungsbewegung des Aktuators 18 spielfrei auf die Keilplatte 12 der Selbstverstärkungseinrichtung übertragen wird. Die Regelung der Bremse 10 gestaltet sich damit erheblich einfacher.

Figur 2 zeigt ein zweites Ausführungsbeispiel einer Bremse 10, welches sich vom in Figur 1 gezeigten ersten Ausführungsbeispiel lediglich dadurch unterscheidet, dass die Spindel 26 sich parallel zu derjenigen Keilschräge der Keilanordnung 11 erstreckt, die zur Selbstverstärkung für Bremsungen in der Hauptbremsrichtung dient. Bei einer Betätigung der Bremse 10 zur Bremsung in Hauptbremsrichtung tritt bei parallel zur genannten Keilschräge angeordneter Spindel 26 keine Relativbewegung zwischen der bewegten Keilplatte 12 und der Mutter 28 auf. Außerdem werden dann keine Querkräfte auf die Spindel 26 übertragen.

## Patentansprüche

1. Elektromechanische Bremse (10), insbesondere für Fahrzeuge, mit einem
elektrischen Aktuator (18), der eine Betätigungskraft erzeugt und auf zumindest ein Reibglied (21) wirkt, um dieses zum Hervorrufen einer Reibkraft gegen ein abzubremsendes Bauteil (22) der Bremse zu drücken, und einer zwischen dem Reibglied (21) und dem elektrischen Aktuator (18) angeordneten Selbstverstärkungseinrichtung mit einer Keilanordnung (11), die zur Selbstverstärkung der vom elektrischen Aktuator erzeugten Betätigungskraft führt,
**dadurch gekennzeichnet, dass**
- der Aktuator (18) nur einen einzigen Elektromotor (24) aufweist und die von ihm erzeugte Betätigungskraft über eine Spindel/Mutter-Anordnung (30) mit einer drehbar gelagerten, ortsfesten Mutter und einer drehfesten, durch Drehung der Mutter axial hin und her bewegbaren Spindel abgibt,
- die Mutter auf der Spindel in Axialrichtung gegenüber der Spindel vorgespannt angebracht ist, und
- die Hin und Herbewegung der Spindel mittels eines Übertragungselementes auf die Keilanordnung (11) übertragen wird, das spielfrei einerseits mit der Spindel und andererseits mit der Keilanordnung (11) verbunden ist.

2. Elektromechanische Bremse (10), insbesondere für Fahrzeuge, mit einem
elektrischen Aktuator (18), der eine Betätigungskraft erzeugt und auf zumindest ein Reibglied (21) wirkt, um dieses zum Hervorrufen einer Reibkraft gegen ein abzubremsendes Bauteil (22) der Bremse zu drücken, und einer zwischen dem Reibglied (21) und dem elektrischen Aktuator (18) angeordneten Selbstverstärkungseinrichtung mit einer Keilanordnung (11), die zur Selbstverstärkung der vom elektrischen Aktuator erzeugten Betätigungskraft führt,
**dadurch gekennzeichnet, dass**
- der Aktuator (18) nur einen einzigen Elektromotor (24) aufweist und die von ihm erzeugte Betätigungskraft über eine Spindel/Mutter-Anordnung (30) mit einer drehbar gelagerten, ortsfesten Spindel (26) und einer drehfesten, durch Drehung der Spindel auf der Spindel axial hin und her bewegbaren Mutter (28) abgibt,
- die drehbare Lagerung der Spindel (26) mittels axial vorgespannter Lager (36, 38) erfolgt,
- die Mutter (28) auf der Spindel (26) in Axialrichtung gegenüber der Spindel vorgespannt angebracht ist, und
- die Hin und Herbewegung der Mutter (28) mittels eines Übertragungselementes auf die Keilanordnung (11) übertragen wird, das spielfrei einerseits mit der Mutter (28) und andererseits mit der Keilanordnung (11) verbunden ist.

3. Elektromechanische Bremse nach Anspruch 2,
**dadurch gekennzeichnet, dass** die zur drehbaren Lagerung der Spindel (26) dienenden axial vorgespannten Lager (36, 38) Schrägkugellager sind.

4. Elektromechanische Bremse nach Anspruch 2,
**dadurch gekennzeichnet, dass** die Spindel (26) in einer Fest- /Loslageranordnung gelagert ist.

5. Elektromechanische Bremse nach einem der Ansprüche 1 bis 4,
**dadurch gekennzeichnet, dass** die Mutter (28) zwei axial gegeneinander verspannte Mutterelemente (40, 42) umfasst.

6. Elektromechanische Bremse nach einem der vorgehenden Ansprüche,
**dadurch gekennzeichnet, dass** das Übertragungselement eine schwenkbar an der Spindel oder der Mutter (28) und der Keilanordnung (11) angelenkte Koppelstange (32) ist, deren Lagerstellen spielfrei vorgespannt sind.

7. Elektromechanische Bremse nach Anspruch 6,
**dadurch gekennzeichnet, dass** die Lagerstellen der Koppelstange (32) als Polygonprofil ausgebildet sind.

8. Elektromechanische Bremse nach Anspruch 6,
**dadurch gekennzeichnet, dass** die Lagerstellen der Koppelstange (32) als Festkörpergelenke ausgebildet sind.

9. Elektromechanische Bremse nach einem der vorhergehenden Ansprüche,
**dadurch gekennzeichnet, dass** die Spindel (26) sich zumindest im Wesentlichen parallel zu einer Keilschräge der Keilanordnung (11) erstreckt.

10. Elektromechanische Bremse nach Anspruch 9,
**dadurch gekennzeichnet, dass** die Keilschräge die für eine Bremsung aus Vorwärtsfahrt zuständige Keilschräge ist.

11. Elektromechanische Bremse nach einem der vorhergehenden Ansprüche,
**dadurch gekennzeichnet, dass** der Elektromotor (24) als Motor/Getriebe-Einheit ausgebildet ist.

## Claims

1. Electromechanical brake (10), especially for motor vehicles, comprising an
electrical actuator (18), which generates an actuation force and acts on at least one friction member (21), in order to force said member against a component (22) of the brake to be slowed down in order to elicit a frictional force, and having a self-energizing system arranged between the friction member (21) and the electrical actuator (18) having a wedge arrangement (11) that serves to self-boost the actuation force produced by the electrical actuator,
**characterised in that**
- the actuator (18) only has one single electric motor (24) and the actuation produced thereby releases via a spindle/nut arrangement (30) having a rotationally received, stationary nut and a rotationally fixed spindle that can axially travel by rotating the spindle,
- the nut is attached prestressed to the spindle in the axial direction in relation to the spindle, and
- the travelling movement of the spindle is transmitted onto the wedge arrangement (11) by means of a transmission element, which is on the one hand connected to the spindle and on the other hand to the wedge arrangement (11) with zero backlash.

2. Electromechanical brake (10), especially for motor vehicles, comprising an electrical actuator (18), which generates an actuation force and acts on at least one friction member (21), in order to force said member against a component (22) of the brake to be slowed down in order to elicit a frictional force, and having a self-energizing system arranged between the friction member (21) and the electrical actuator (18) having a wedge arrangement (11) that serves to self-boost the actuation force produced by the electrical actuator,
**characterised in that**,
- the actuator (18) only has one single electric motor (24) and the actuation produced thereby releases via a spindle/nut arrangement (30) having a rotationally received, stationary nut (26) and a rotationally fixed nut (28) that can axially travel on the spindle by rotating the spindle
- the spindle (26) is rotationally received by means of axially prestressed bearings (36, 38),
- the nut (28) is attached prestressed to the spindle (26) in the axial direction in relation to the spindle, and
- the travelling movement of the nut (28) is transmitted onto the wedge arrangement (11) by means of a transmission element which is connected on the one hand to the nut (28) and on the other hand to the wedge arrangement (11) with zero backlash.

3. Electromechanical brake according to claim 2,
**characterised in that**
the axially prestressed bearings (36, 38) used for rotationally receiving the spindle (26) are oblique ball bearings.

4. Electromechanical brake according to claim 2,
**characterised in that**
the spindle (26) is received in a fixed/moveable bearing arrangement.

5. Electromechanical brake according to one of claims 1 to 4, **characterised in that** the nut (28) has two nut elements (40, 42) which are axially prestressed against one another.

6. Electromechanical brake according to one of the preceding claims,
**characterised in that**
the transmission element is a coupling rod (32) which is pivotably coupled to the spindle or the nut (28) and the wedge arrangement (11), the bearing points of which are prestressed with zero backlash.

7. Electromechanical brake according to claim 6,
**characterised in that**
the bearing points of the coupling rod (32) are embodied as a polygonal profile.

8. Electromechanical brake according to claim 6,
**characterised in that**
the bearing points of the coupling rod (32) are embodied as solid body links.

9. Electromechanical brake according to one of the preceding claims,
**characterised in that**
the spindle (26) extends at least essentially parallel to a wedge bevel of the wedge arrangement (11).

10. Electromechanical brake according to claim 9,
**characterised in that**
the wedge bevel is the wedge bevel which is responsible for a braking action when travelling forward.

11. Electromechanical brake according to one of the preceding claims,
**characterised in that** the electric motor (24) is embodied as an engine/transmission unit.

## Revendications

1. Frein électromécanique (10), destiné en particulier aux véhicules, comprenant un dispositif d'actionnement électrique (18), qui produit une force de commande et agit sur au moins un organe de friction (21) pour presser celui-ci afin de susciter une force de friction contre un composant à freiner (22) du frein et un dispositif auto-renforçateur agencé entre l'organe de friction (21) et le dispositif d'actionnement électrique (18) avec un système de clavetage (11), qui conduit à l'auto-renforcement de la force de commande produite par le dispositif d'actionnement électrique,
**caractérisé en ce que**
- le dispositif d'actionnement (18) ne présente qu'un seul moteur électrique (24) et délivre la force de commande qu'il produit via un système de broche/écrou (30) avec un écrou fixe monté à rotation et une broche solidaire en rotation, déplaçable axialement dans un mouvement de va-et-vient par rotation de l'écrou,
- l'écrou est agencé sur la broche en mode précontraint dans la direction axiale par rapport à la broche, et
- le mouvement de va-et-vient de la broche est transmis au système de clavetage (11) au moyen d'un élément de transmission, qui est, d'une part, raccordé sans jeu à la broche et, d'autre part, au système de clavetage (11).

2. Frein électromécanique (10), destiné en particulier aux véhicules, comprenant un dispositif d'actionnement électrique (18) qui produit une force de commande et agit sur au moins un organe de friction (21) pour presser celui-ci afin de susciter une force de friction contre un composant à
freiner (22) du frein et un dispositif auto-renforçateur agencé entre l'organe de friction (21) et le dispositif d'actionnement électrique (18) avec un système de clavetage (11), qui conduit à l'auto-renforcement de la force de commande produite par le dispositif d'actionnement électrique,
**caractérisé en ce que**
- le dispositif d'actionnement (18) ne présente qu'un seul moteur électrique (24) et délivre la force de commande qu'il produit via un système de broche/écrou (30) avec une broche fixe (26) montée à rotation et un écrou solidaire en rotation (28), déplaçable axialement sur la broche dans un mouvement de va-et-vient par rotation de la broche,
- le montage à rotation de la broche (26) se fait au moyen de paliers précontraints axialement (36, 38),
- l'écrou (28) est agencé en mode précontraint sur la broche (26) dans la direction axiale par rapport à la broche, et
- le mouvement de va-et-vient de l'écrou (28) est transmis au système de clavetage (11) au moyen d'un élément de transmission, qui est, d'une part, raccordé sans jeu à l'écrou et, d'autre part, au système de clavetage (11).

3. Frein électromécanique selon la revendication 2,
**caractérisé en ce que** les paliers précontraints axialement (36, 38) servant au montage à rotation de la broche (26) sont des roulements à billes à portée oblique.

4. Frein électromécanique selon la revendication 2,
**caractérisé en ce que** la broche (26) est montée dans un système de paliers fixes/libres.

5. Frein électromécanique selon l'une quelconque des revendications 1 à 4,
**caractérisé en ce que** l'écrou (28) comprend deux éléments d'écrou (40, 42) serrés axialement l'un par rapport à l'autre.

6. Frein électromécanique selon l'une quelconque des revendications précédentes,
**caractérisé en ce que** l'élément de transmission est une barre de couplage (32) articulée à pivotement sur la broche ou l'écrou (28) et sur le système de clavetage (11), dont les points d'appui sont précontraints sans jeu.

7. Frein électromécanique selon la revendication 6,
**caractérisé en ce que** les points d'appui de la barre de couplage (32) se présentent sous la forme d'un profilé polygonal.

8. Frein électromécanique selon la revendication 6,
**caractérisé en ce que** les points d'appui de la barre de couplage (32) se présentent sous la forme d'une articulation intégrée.

9. Frein électromécanique selon l'une quelconque des revendications précédentes,
**caractérisé en ce que** la broche (26) s'étend au moins de manière sensiblement parallèle à un chanfrein du système de clavetage (11).

10. Frein électromécanique selon la revendication 9,
**caractérisé en ce que** le chanfrein de clavetage est le chanfrein responsable d'un freinage en marche avant.

11. Frein électromécanique selon l'une quelconque des revendications précédentes,
**caractérisé en ce que** le moteur électrique (24) se présente sous la forme d'une unité moteur/transmission.
